# EUROPÄISCHE PATENTANMELDUNG

(11) **EP 1 330 133 A1**
(43) Veröffentlichungstag der Anmeldung: **23.07.2003**
(21) Anmeldenummer: 02001276.1
(22) Anmeldetag: 17.01.2002
(51) Int. Cl.: H04Q 7/30

(54) **Funkkommunikationssystem**

(71) Anmelder: SIEMENS AKTIENGESELLSCHAFT, 80333 München (DE)
(72) Erfinder: Auth, Elisabeth, Dr., 89075 Ulm (DE); Dressler, Hans-Joachim, Dr., 89075 Ulm (DE); Gerwens, Andreas, Dr., 89075 Ulm (DE); Hofmann, Ralf, Dr., 89518 Heidenheim (DE); Riedlinger, Roland, 89077 Ulm (DE); Rösch, Markus, Dr., 82041 Oberhaching (DE)

(57) **Zusammenfassung**

In einem Funkkommunikationssystem ist eine Basisstation (Nbⁱ) vorgesehen, über die erste Kommunikationsverbindungen und zweite Kommunikationsverbindungen geleitet werden. Es ist eine erste Funknetzsteuerung (RNC1) vorgesehen, über die die ersten Kommunikationsverbindungen geleitet werden, und eine zweite Funknetzsteuerung (RNC2), über die die zweiten Kommunikationsverbindungen geleitet werden. Die Basisstation (Nbⁱ) weist ein gemeinsames Hochfrequenzteil (Hfⁱ) auf, das Signale der ersten Kommunikationsverbindungen und Signale der zweiten Kommunikationsverbindungen verarbeitet. Die Signale der ersten Kommunikationsverbindungen und der zweiten Kommunikationsverbindungen werden mit unterschiedlichen Trägerfrequenzen über eine Luftschnittstelle übertragen und können von unterschiedlichen Betreibern (B1, B2) vermittelt werden.

## Beschreibung

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Funkkommunikationssysteme können aufgeteilt werden in ein Stammnetzwerk (Core net) und in ein Funkzugangsnetz, auch RAN (Radio Access Network) bezeichnet. In dem Stammnetzwerk werden Nutz- und Signalisierungsdaten einer Vielzahl von Endgeräten über weite Strecken leitungsgebunden befördert. Über das Stammnetzwerk kann darüber hinaus eine Verbindung zu einem Festkommunikationsnetz realisiert werden. In dem Funkzugangsnetz werden von den Endgeräten empfangene Daten in ein für die Übertragung im Stammnetzwerk geeignetes Format umgesetzt. Ferner wird das Format von vom Stammnetzwerk empfangenen Daten an die Funkübertragung angepasst und an die jeweilige Funkstation weitergeleitet, innerhalb von deren Sendebereich sich das betreffende Endgerät aufhält.

Funkkommunikationssysteme der ersten und zweiten Generation sind derzeit weltweit im Einsatz und stoßen wegen der großen Nachfrage nach mobiler Kommunikation an ihre Kapazitätsgrenzen. Die sich abzeichnenden Kapazitätsprobleme sollen durch die Funkkommunikationssysteme der dritten Generation gelöst werden. Eines der erfolgversprechendsten Funkkommunikationssysteme der dritten Generation ist das Universal Mobile Telecommunication System (UMTS), das von dem Standardisierungsgremium 3GPP (Third Generation Partnership Project) spezifiziert wurde (siehe zum Beispiel B. Walke, Mobilfunknetze und ihre Protokolle, Band 1, Seite 370 bis 396, Teubner-Verlag 2000).

Für die Übertragung über die Luftschnittstelle stehen bei UMTS mehrere 5 MHz breite Frequenzkanäle innerhalb eines 60 MHz Bandes zur Verfügung. Die unterschiedlichen 5 MHz breiten Frequenzkanäle können dabei unterschiedlichen Mobilfunkbetreibern zugewiesen sein. Für jeden der 5 MHz breiten Frequenzkanäle ist dabei gemäß den UMTS-Vergabebedingungen der Aufbau einer unabhängigen Infrastruktur mit Stammnetz und Funkzugangsnetz erforderlich.

Wie aus der Pressemitteilung der Regulierungsbehörde für Telekommunikation und Post, UMTS-Infrastruktursharing vom 5. Juni 2001, sowie dem Thesenpapier Infrastruktursharing zu entnehmen ist, ist dabei die gemeinsame Nutzung von Grundstücken, Masten, Antennen, Kabeln und Kombinern durch mehrere Betreiber zulässig. Darunter fällt auch die gemeinsame Nutzung eines Schrankes, in dem Basisstationen, Verstärker und Stromversorgung untergebracht sind, sowie eine Nutzung logisch getrennter Basisstationen und/oder Funknetzsteuerungen, sofern eine unabhängige Steuerung der eigenen logischen Einheit durch jeden Betreiber sichergestellt ist.

Der Erfindung liegt das Problem zugrunde, ein Funkkommunikationssystem anzugeben, das zur Vermittlung in verschiedenen Frequenzkanälen geeignet ist.

Dieses Problem wird erfindungsgemäß gelöst durch ein Funkkommunikationssystem gemäß Anspruch 1. Weitere Ausgestaltungen der Erfindung gehen aus den übrigen Ansprüchen hervor.

Es ist eine Basisstation vorgesehen, über die erste Kommunikationsverbindungen, für die Signale unter Verwendung einer ersten Trägerfrequenz über eine Luftschnittstelle übertragen werden, und zweite Kommunikationsverbindungen, für die Signale unter Verwendung einer zweiten Trägerfrequenz über die Luftschnittstelle übertragen werden, geleitet werden. Die ersten Kommunikationsverbindungen werden über eine erste Funknetzsteuerung geleitet. Die zweiten Kommunikationsverbindungen werden über eine zweite Funknetzsteuerung geleitet. Die Basisstation weist ein gemeinsames Hochfrequenzteil auf, das sowohl Signale der ersten Kommunikationsverbindungen, als auch Signale der zweiten Kommunikationsverbindungen verarbeitet. Durch Verwendung der ersten Trägerfrequenz werden die ersten Kommunikationsverbindungen in einem ersten Frequenzkanal übertragen, durch Verwendung der zweiten Trägerfrequenz werden die zweiten Kommunikationsverbindungen in einem zweiten Frequenzkanal übertragen. Der erste Frequenzkanal und der zweite Frequenzkanal können unterschiedlichen Betreibern zugewiesen sein.

Es liegt im Rahmen der Erfindung, dass das Hochfrequenzteil einen Sende- und einen Empfangszweig aufweist. Der Sendezweig und der Empfangszweig sind über ein Duplexfilter zur Trennung von Sende- und Empfangsband mit einer Antenne verbunden. Der Sendezweig umfasst einen Leistungsverstärker. Der Empfangszweig umfasst einen Vorverstärker und einen Splitter, der mit dem Ausgang des Vorverstärkers verbunden ist. Der Splitter weist zwei Ausgänge auf. An jedem der zwei Ausgänge des Splitters liegt das Signal breitbandig an, also alle Frequenzen. In den nachgeschalteten Mischerstufen wird die jeweils benötigte Frequenz herausgefiltert. Da in dieser Anordnung empfangene Signale zunächst durch den Vorverstärker verstärkt und dann entsprechend ihrer Trägerfrequenz gesplittet werden, wird ein günstiges Signal/Rauschverhältnis am Eingang des Vorverstärkers erzielt. Ein Splitten des Antennensignals in Empfangsrichtung hätte einen Leistungsverlust um mindestens die Hälfte in jedem Antennenzweig zur Folge, was zu einer Verschlechterung des Signal/Rauschverhältnisses führen würde. Dieses wird durch die Verwendung eines gemeinsamen Vorverstärkers vermieden.

Zur Realisierung einer Empfangsdiversität ist es vorteilhaft, das gemeinsame Hochfrequenzteil mit einem ersten Hochfrequenzzweig und einem zweiten Hochfrequenzzweig vorzusehen, wobei der erste Hochfrequenzzweig mit einer ersten Antenne und der zweite Hochfrequenzzweig mit einer zweiten Antenne verbunden ist. Dabei sind der erste Hochfrequenzzweig und der zweite Hochfrequenzzweig im Wesentlichen gleich aufgebaut. Der erste Hochfrequenzzweig und der zweite Hochfrequenzzweig weisen jeweils ein Duplexfilter, einen Sendezweig mit einem Leistungsverstärker und einen Empfangszweig mit einem Vorverstärker und einem Splitter auf. Dem Sendezweig des ersten Hochfrequenzzweiges werden dabei Signale mit der ersten Trägerfrequenz und dem Sendezweig des zweiten Hochfrequenzzweiges Signale mit der zweiten Trägerfrequenz zugeführt.

Zur Realisierung einer Sendediversität liegt es im Rahmen der Erfindung, dass der Sendezweig jeweils einen Kombiner aufweist, dem Signale mit der ersten Trägerfrequenz und Signale mit der zweiten Trägerfrequenz zugeführt werden, und der mit dem Eingang des Leistungsverstärkers verbunden ist. Dadurch werden über beide Antennen Signale mit der ersten Trägerfrequenz und Signale mit der zweiten Trägerfrequenz ausgesendet. Da die Signale vor dem Leistungsverstärker kombiniert werden, kann ein Leistungsverstärker eingesetzt werden, der dieselbe Summenausgangsleistung besitzt, wie ein Verstärker, der nur eine Frequenz unterstützt. Würden die Signale hinter den Leistungsverstärkerausgängen kombiniert, so müssten wegen der nahe aneinanderliegenden Trägerfrequenzen Hybridkombiner eingesetzt werden, die je Trägerfrequenz einen Verlust von mindestens 3dB aufweisen. Daher müsste die Ausgangsleistung der Leistungsverstärker verdoppelt werden, was Nachteile, wie zum Beispiel hohe DC-Leistungsaufnahme und höhere Verlustleistung mit sich bringt. Erfindungsgemäß werden diese Nachteile dadurch vermieden, dass die Signale mit der ersten Trägerfrequenz und die Signale mit der zweiten Trägerfrequenz bereits vor dem Leistungsverstärker zusammengeführt werden.

Zum Aufbau eines Funkkommunikationssystems mit mehreren Sektoren liegt es im Rahmen der Erfindung, je Sektor ein gemeinsames Hochfrequenzteil vorzusehen.

Gemäß einer Ausgestaltungsform der Erfindung weist die Basisstation zwei getrennte Signalverarbeitungseinrichtungen auf, wobei in einer ersten Signalverarbeitungseinrichtung die Signale mit der ersten Trägerfrequenz und in einer zweiten Signalverarbeitungseinrichtung die Signale mit der zweiten Trägerfrequenz verarbeitet werden. Die Signalverarbeitungseinheit umfasst dabei jeweils Mittel zur AD/DA-Wandlung, sowie zur Erzeugung beziehungsweise zum Heruntermischen eines Hochfrequenzsignals, Mittel zur Basisbandverarbeitung, eine Steuereinheit und eine Schnittstelleneinheit, die die Schnittstelle zu einer Funknetzsteuerung darstellt. Dabei weist die erste Signalverarbeitungseinheit eine Schnittstelle zu einer anderen Funknetzsteuerung auf, als die zweite Signalverarbeitungseinrichtung. Die verschiedenen Funknetzsteuerungen, die mit der ersten Signalverarbeitungseinrichtung beziehungsweise der zweiten Signalverarbeitungseinrichtung kommunizieren, können dabei unterschiedlichen Mobilfunkbetreibern zugewiesen sein.

Gemäß einer anderen Ausgestaltung der Erfindung weist die Basisstation eine Signalverarbeitungseinrichtung auf, in der DV(Datenverarbeitungs)-Programme zur Verarbeitung der Signale mit der ersten Trägerfrequenz und der Signale mit der zweiten Trägerfrequenz vorgesehen sind. Dabei werden in einem ersten DV-Programm durch Verarbeitung der Signale mit der ersten Trägerfrequenz erste Daten für die ersten Kommunikationsverbindungen verarbeitet und in einem zweiten DV-Programm durch Verarbeitung der Signale mit der zweiten Trägerfrequenz zweite Daten für die zweite Kommunikationsverbindung verarbeitet. Das erste DV-Programm und das zweite DV-Programm greifen dabei auf unterschiedliche, voneinander unabhängige Datenbasen zu. Die Signalverarbeitungseinrichtung weist jeweils Mittel zur AD/DA-Wandlung, sowie zur Erzeugung beziehungsweise zum Heruntermischen von Hochfrequenzsignalen, Mittel zur Basisbandverarbeitung, eine Steuereinheit, sowie eine Schnittstelleneinheit auf. Durch die DV-Programme wird die Signalverarbeitungseinrichtung logisch in zwei getrennte Signalverarbeitungseinrichtungen aufgeteilt. Bei der Signalverarbeitung findet dabei keinerlei Austausch zwischen dem ersten Datenverarbeitungsprogramm und dem zweiten Datenverarbeitungsprogramm statt. Für Signale mit der ersten Trägerfrequenz beziehungsweise erste Daten, stellt die Signalverarbeitungseinheit eine Schnittstelle zu der ersten Funknetzsteuerung dar. Für Signale mit der zweiten Trägerfrequenz beziehungsweise zweite Daten, stellt die Signalverarbeitungseinrichtung die Schnittstelle zu der zweiten Funknetzsteuerung dar. Die erste Funknetzsteuerung und die zweite Funknetzsteuerung können von unterschiedlichen Betreibern eingesetzt werden.

Gemäß einer weiteren Ausgestaltung der Erfindung weist die Basisstation einen ersten Kommunikationsanschluss und einen zweiten Kommunikationsanschluss auf, wobei der erste Kommunikationsanschluss über eine erste Schnittstelle mit der ersten Funknetzsteuerung und der zweite Kommunikationsanschluss über eine zweite Schnittstelle mit der zweiten Funknetzsteuerung verbunden ist. In der Basisstation werden die ersten Kommunikationsverbindungen über den ersten Kommunikationsanschluss und die zweiten Kommunikationsverbindungen über den zweiten Kommunikationsanschluss geleitet. Dabei liegt es im Rahmen der Erfindung, den ersten Kommunikationsverbindungen und den zweiten Kommunikationsverbindungen jeweils eine Kennung zuzuweisen. Die ersten beziehungsweise zweiten Kommunikationsverbindungen werden in diesem Fall anhand der Kennung dem ersten beziehungsweise zweiten Kommunikationsanschluss zugeordnet. Diese Ausgestaltung der Erfindung nutzt die im 3GPP-Standard nicht eingeschränkte Möglichkeit, einer softwaretechnisch erzeugten funktionalen Einheit innerhalb einer Basisstation einen Kommunikationsanschluß über eine eindeutige Kennung zuzuweisen. Eine funktionale Einheit ist in diesem Zusammenhang als Gesamtheit der zu implementierenden Ressourcen definiert, die durch das im Standard 3GPP TS 25.430 V3.6.0 (UTRAN Iub Interface: General Aspects and Principles (Release 1999)) beschriebene Logische Modell der Basisstation abgedeckt werden und folglich ein mit den einschlägigen 3GPP Spezifikationen konformes Verhalten auf den äußeren Schnittstellen (Iub-Interface und Uu-Interface) einer Basisstation gewährleisten.

Dadurch sind mehrere logische Beziehungen zwischen der Basisstation und verschiedenen Funknetzsteuerungen möglich. Erfindungsgemäß erfolgt eine feste Zuordnung zwischen der jeweiligen Funknetzsteuerung und dem jeweiligen Kommunikationsanschluss.

Vorzugsweise weist die Basisstation mehrere Signalverarbeitungseinrichtungen auf, die als Pool eingesetzt werden, um sowohl Signale von ersten Kommunikationsverbindungen, als auch Signale von zweiten Kommunikationsverbindungen zu verarbeiten. Dadurch wird die Verarbeitungskapazität der Basisstation erhöht.

Die Erfindung kann analog auf den Fall übertragen werden, dass Kommunikationsverbindungen über mehr als zwei Frequenzkanäle von mehr als zwei Betreibern übertragen werden. Da einem Betreiber mehrere Frequenzkanäle zugewiesen sein können, kann die Zahl der Betreiber kleiner oder gleich der Zahl der Frequenzkanäle sein.

Die Erfindung ist für Funkkommunikationssysteme aller Funk-Standards anwendbar, in denen die verschiedenen Betreiber durch unterschiedliche Trägerfrequenzen voneinander getrennt sind, z.B. UMTS-Standard.

Im Folgenden wird die Erfindung anhand von Ausführungsbeispielen, die in den Figuren dargestellt sind, näher erläutert.

Figur 1 zeigt ein Funkkommunikationssystem, das von zwei verschiedenen Betreibern benutzt wird.

Figur 2 zeigt ein gemeinsames Hochfrequenzteil für eine Basisstation mit Sendediversität.

Figur 3 zeigt ein gemeinsames Hochfrequenzteil für eine Basisstation mit Sende- und Empfangsdiversität.

Figur 4 zeigt eine Basisstation mit einem gemeinsamen Hochfrequenzteil und zwei physikalisch getrennten Signalverarbeitungseinrichtungen.

Figur 5 zeigt eine Basisstation mit einem gemeinsamen Hochfrequenzteil und einer Signalverarbeitungseinrichtung, die programmtechnisch in zwei logische Signalverarbeitungseinrichtungen getrennt ist.

Figur 6 zeigt ein Funkkommunikationssystem, in dem in einer Basisstation zwei Kommunikationsanschlüsse eingerichtet sind, die verschiedenen Funknetzsteuerungen zugeordnet sind.

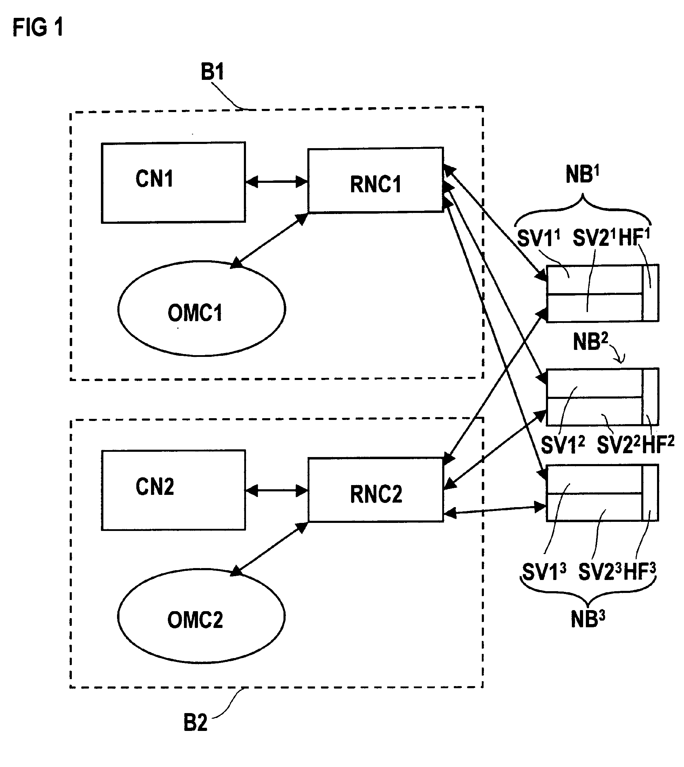

Ein Funkkommunikationssystem (siehe Figur 1) umfasst ein erstes Stammnetzwerk CN1, das mit einer ersten Funknetzsteuerung RNC1 kommuniziert. Die erste Funknetzsteuerung RNC1 wird durch ein erstes Operations- und Wartungszentrum OMC1 gesteuert. Das erste Stammnetzwerk CN1, die erste Funknetzsteuerung RNC1 und das erste Operations- und Wartungszentrum OMC1 sind dabei einem ersten Betreiber B1 zugeordnet.

Ferner umfasst das Funkkommunikationssystem ein zweites Stammnetzwerk CN2, das mit einer zweiten Funknetzsteuerung RNC2 kommuniziert. Die zweite Funknetzsteuerung RNC2 wird von einem zweiten Operations- und Wartungszentrum OMC2 gesteuert. Das zweite Stammnetzwerk CN2, die zweite Funknetzsteuerung RNC2 und das zweite Operations- und Wartungszentrum OMC2 sind dabei einem zweiten Betreiber B2 zugeordnet.

Ferner umfasst das Funkkommunikationssystem drei Basisstationen NB¹, NB², NB³. Jede der Basisstationen NBⁱ, i = 1,2,3, umfasst ein gemeinsames Hochfrequenzteil HFⁱ, sowie eine erste Signalverarbeitungseinrichtung SV1ⁱ und eine zweite Signalverarbeitungseinrichtung SV2ⁱ.

Signale zu ersten Kommunikationsverbindung, die von dem ersten Betreiber B1 vermittelt werden, werden jeweils in der ersten Signalverarbeitungseinrichtungen SV1ⁱ verarbeitet. Signale zu zweiten Kommunikationsverbindungen, die von dem zweiten Betreiber B2 vermittelt werden, werden jeweils in den zweiten Signalverarbeitungseinrichtungen SV2ⁱ verarbeitet. In dem gemeinsamen Hochfrequenzteil HFⁱ werden sowohl Signale der ersten Kommunikationsverbindungen als auch Signale der zweiten Kommunikationsverbindungen verarbeitet.

Da die Basisstationen Nbⁱ sowohl Signale von ersten Kommunikationsverbindungen, die von dem ersten Betreiber B1 vermittelt werden, als auch Signale von zweiten Kommunikationsverbindungen, die von dem zweiten Betreiber B2 vermittelt werden, verarbeiten, reduziert sich der Infrastrukturaufwand für den einzelnen Betreiber B1, B2.

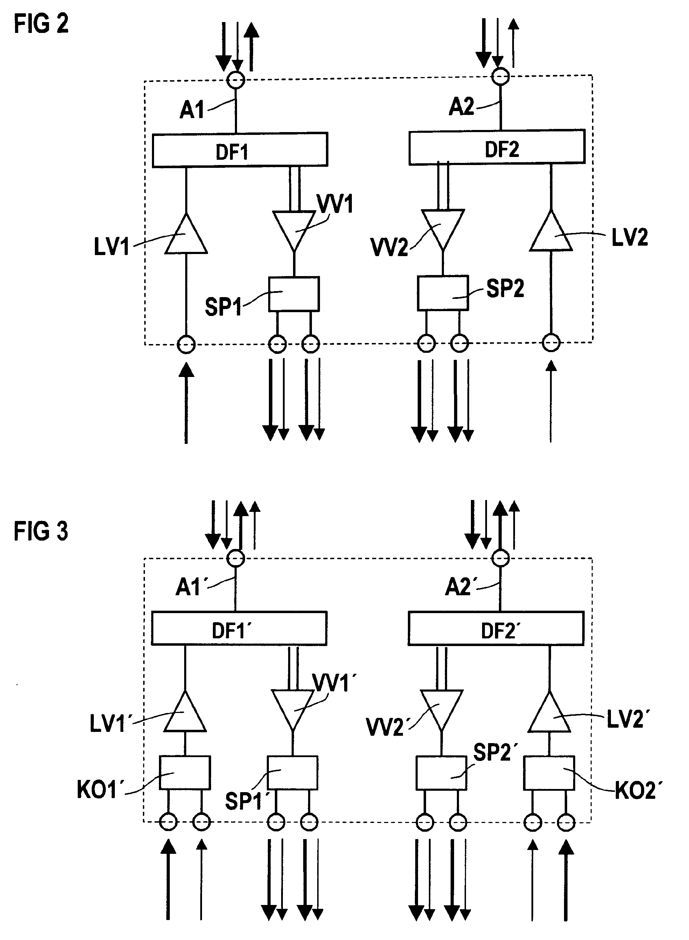

Ein gemeinsames Hochfrequenzteil, das für Empfangsdiversität geeignet ist, weist zwei getrennte Hochfrequenzzweige auf (siehe Figur 2). Ein erster Hochfrequenzzweig ist mit einer Antenne A1 versehen, die mit einem ersten Duplexfilter DF1 verbunden ist. Das erste Duplexfilter DF1 trennt Sende- und Empfangsband. Ein erster Sendezweig umfasst einen ersten Leistungsverstärker LV1, der mit dem ersten Duplexfilter DF1 verbunden ist. Ein erster Empfangszweig umfasst einen ersten rauscharmen Vorverstärker VV1, dessen Eingänge mit dem ersten Duplexfilter DF1 verbunden sind, und dessen Ausgang mit einem erster Splitter SP1 verbunden ist. Der Splitter SP1 weist zwei Ausgänge auf. An jedem der zwei Ausgänge des Splitters liegt das Signal breitbandig an, also alle Frequenzen. In den nachgeschalteten Mischerstufen wird die jeweils benötigte Frequenz herausgefiltert.

Ein zweiter Hochfrequenzzweig weist eine zweite Antenne A2 auf, die mit einem zweiten Duplexfilter TF2 zur Trennung von Sende- und Empfangsband verbunden ist. Das zweite Duplexfilter DF2 ist mit einem zweiten Sendezweig mit einem zweiten Leistungsverstärker LV2 verbunden. Ferner ist das zweite Duplexfilter DF2 mit einem zweiten Empfangszweig mit einem zweiten Vorverstärker VV2 und einem zweiten Splitter SP2 verbunden. Die Eingänge des zweiten Vorverstärkers VV2 sind mit dem zweiten Duplexfilter DF2 verbunden, der Ausgang des zweiten Vorverstärkers VV2 ist mit dem Eingang des zweiten Splitters SP2 verbunden. Der zweite Splitter SP2 weist zwei Ausgänge auf. An jedem der zwei Ausgänge des Splitters liegt das Signal breitbandig an, also alle Frequenzen. In den nachgeschalteten Mischerstufen wird die jeweils benötigte Frequenz herausgefiltert. In Figur 2 sind die Signale mit unterschiedlichen Trägerfrequenzen durch von ein- beziehungsweise ausgehende Pfeile mit unterschiedlicher Strichstärke gekennzeichnet. Am Eingang des ersten Leistungsverstärkers LV1 liegen Signale einer ersten Trägerfrequenz an, am Eingang des zweiten Leistungsverstärkers LV2 liegen Signale einer zweiten Trägerfrequenz an. Die Signale mit der ersten Trägerfrequenz werden über die erste Antenne A1 gesendet, die Signale mit der zweiten Trägerfrequenz werden über die zweite Antenne A2 gesendet.

Anhand von Figur 3 wird im Weiteren ein gemeinsames Hochfrequenzteil erläutert, das zu Sende- und Empfangsdiversität geeignet ist. Das Hochfrequenzteil umfasst einen ersten Hochfrequenzzweig mit einer ersten Antenne A1', einem ersten Duplexfilter DF1', einem ersten Empfangszweig und einem ersten Sendezweig. Der erste Empfangszweig umfasst einen ersten Vorverstärker VV1' und einen ersten Splitter SP1', wobei der Ausgang des ersten Vorverstärkers VV1' mit dem Eingang des ersten Splitters SP1' verbunden. Der erste Splitter SP1' weist zwei Ausgänge auf. An jedem der zwei Ausgänge des ersten Splitters SP1' liegt das Signal breitbandig an, also alle Frequenzen. In den nachgeschalteten Mischerstufen wird die jeweils benötigte Frequenz herausgefiltert. Der erste Sendezweig umfasst einen ersten Leistungsverstärker LV1', dessen Eingang mit dem Ausgang eines Kombiners KO1' verbunden ist.

Der erste Kombiner KO1' weist zwei Eingänge auf, an denen Signale mit unterschiedlicher Trägerfrequenz anliegen. Der erste Kombiner KO1' führt die Signale unterschiedlicher Trägerfrequenz auf einen Ausgang zusammen.

Ein zweiter Hochfrequenzzweig umfasst eine zweite Antenne A2', einen zweiten Duplexfilter DF2' zur Trennung von Sendeund Empfangsband, einen zweiten Empfangszweig und einen zweiten Sendezweig. Der zweite Empfangszweig umfasst einen zweiten Vorverstärker VV2', dessen Ausgang mit einem zweiten Splitter SP2' verbunden ist. Der zweite Splitter SP2' weist zwei Ausgänge auf. An jedem der zwei Ausgänge des zweiten Splitters liegt das Signal breitbandig an, also alle Frequenzen. In den nachgeschalteten Mischerstufen wird die jeweils benötigte Frequenz herausgefiltert. Der zweite Sendezweig umfasst einen zweiten Leistungsverstärker LV2', dessen Eingang mit dem Ausgang eines zweiten Kombiners KO2' verbunden ist. Der zweite Kombiner KO2' weist zwei Eingänge auf, an denen Signale mit unterschiedlicher Trägerfrequenz anliegen. Der Kombiner KO2' führt die Signale mit unterschiedlicher Trägerfrequenz auf den einen Ausgang zusammen. In Figur 3 sind Signale unterschiedlicher Trägerfrequenz durch Pfeile unterschiedlicher Strichstärke dargestellt.

Zum Aufbau eines Funkkommunikationssystems mit mehreren Sektoren wird je Sektor ein gemeinsames Hochfrequenzteil, wie es anhand von Figur 2 oder 3 beschrieben wurde, vorgesehen.

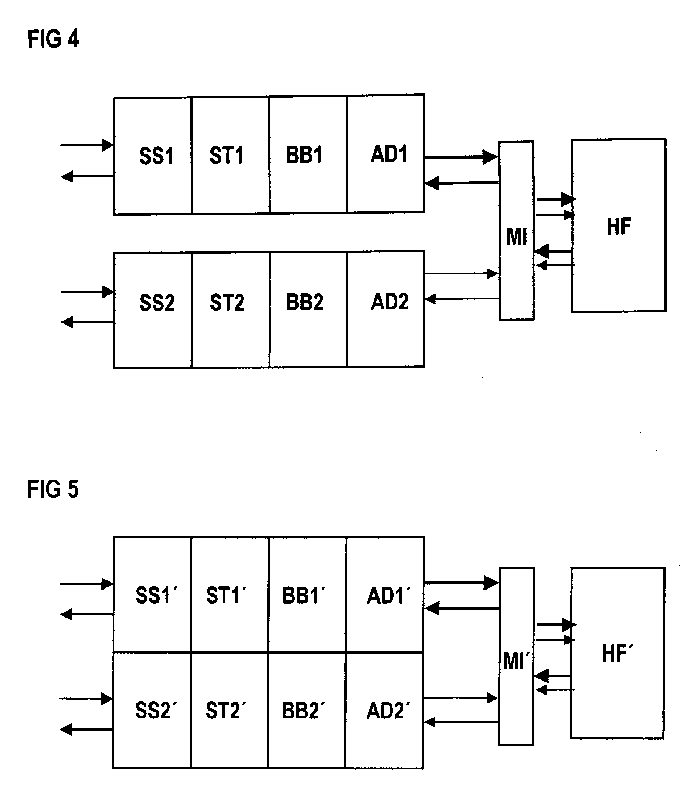

Eine Basisstation (s. Fig 4) umfasst ein gemeinsames Hochfrequenzteil HF, wie es zum Beispiel anhand von Figur 2 oder 3 beschrieben wurde, sowie zwei physikalisch getrennte Signalverarbeitungseinrichtungen. Eine erste Signalverarbeitungseinrichtung weist einen ersten AD/DA-Wandler AD1, eine Basisbandverarbeitungseinrichtung BB1, eine Steuereinheit ST1 und eine Schnittstelleneinheit SS1 auf. Eine zweite Signalverarbeitungseinrichtung weist einen zweiten AD/DA-Wandler AD2, eine zweite Basisbandverarbeitungseinrichtung BB2, eine zweite Steuereinheit ST2 und eine zweite Schnittstelleneinheit SS2 auf. Zudem erfolgt die Erzeugung beziehungsweise das Heruntermischen eines Hochfrequenzsignals in einer Mischereinheit MI zwischen AD/DA-Wandler und Hochfrequenzteil. In der ersten Signalverarbeitungseinrichtung werden Signale einer ersten Trägerfrequenz verarbeitet, die in Figur 4 als Pfeile mit stärkerer Strichstärke dargestellt sind, in der zweiten Signalverarbeitungseinrichtung werden Signale einer zweiten Trägerfrequenz verarbeitet, die in Figur 4 durch Pfeile schwächerer Strichstärke dargestellt sind. Die Aufteilung der Signale auf die erste Signalverarbeitungseinrichtung und die zweite Signalverarbeitungseinrichtung erfolgt hardwaremäßig durch Verbindung der entsprechenden Ein- bzw. Ausgänge der Empfangs- bzw. Sendezweige des Hochfrequenzteils mit der jeweiligen Signalverarbeitungseinrichtung.

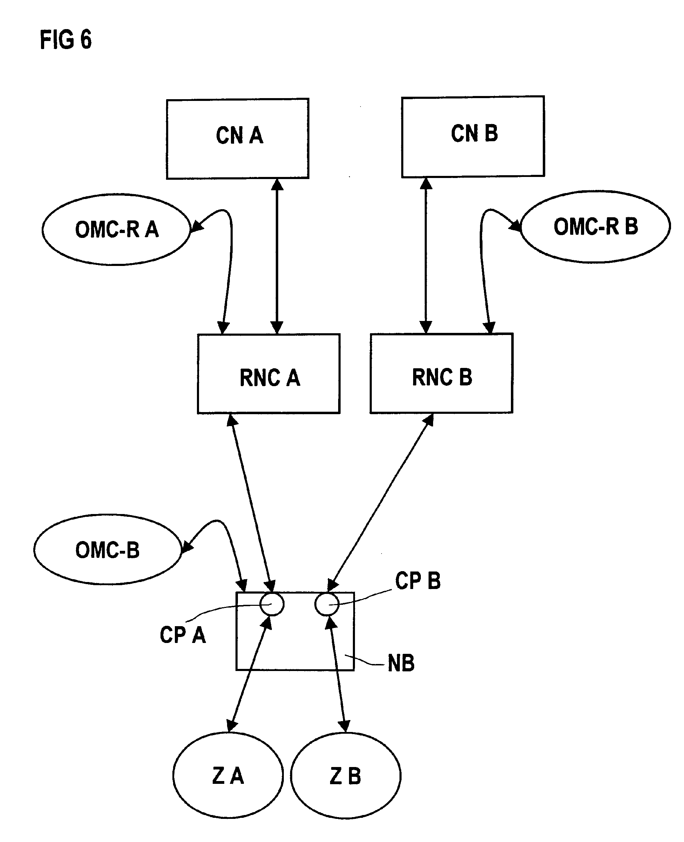

In Figur 5 ist eine Basisstation dargestellt, die eine gemeinsame Hochfrequenzeinheit HF' aufweist, die zum Beispiel wie anhand von Figur 2 und Figur 3 beschrieben, aufgebaut ist. Die Basisstation weist darüber hinaus eine Signalverarbeitungseinrichtung auf. In der Signalverarbeitungseinrichtung werden durch DV-Programme zwei logisch unabhängige Signalverarbeitungseinrichtungen emuliert. Eine erste Signalverarbeitungseinrichtung umfasst erste Mittel AD1' zur AD-/DA-Wandlung sowie eine erste Basisbandverarbeitung BB1', eine erste Steuereinheit ST1' und eine erste Schnittstelleneinheit SS1'. Eine zweite Signalverarbeitungseinrichtung umfasst zweite Mittel AD2' zur AD/DA-Wandlung, eine zweite Basisbandverarbeitungseinrichtung BB2', eine zweite Steuereinheit ST2', sowie eine zweite Schnittstelleneinheit SS2'. Zudem erfolgt die Erzeugung beziehungsweise das Heruntermischen eines Hochfrequenzsignals in einer Mischereinheit MI' zwischen AD/DA-Wandler und Hochfrequenzteil. Die logisch getrennten Einheiten werden nur softwaretechnisch erzeugt. Die DV-Programme laufen auf der gleichen Hardware ab. Die DV-Programme greifen dabei auf unabhängige Datenbasen zu, die betreiberspezifische Einstellungen enthalten. Die DV-Programme bewirken, dass zwei voneinander unabhängige Prozeduren zur Signalverarbeitung zur Verfügung stehen. Die Zuordnung der zu verarbeitenden Signale zu der ersten Signalverarbeitungseinrichtung bzw. der zweiten Signalverarbeitungseinrichtung, erfolgt anhand der Trägerfrequenz des jeweiligen Signals.

In einem weiteren Ausführungsbeispiel umfasst ein Funkkommunikationssystem ein erstes Stammnetzwerk CN A, das mit einer ersten Funknetzsteuerung RNC A kommuniziert (s. Fig. 6). Die erste Funknetzsteuerung RNC A wird von einem ersten Operations- und Wartungszentrum OMC-R A gesteuert. Das erste Stammnetzwerk CN A, die erste Funknetzsteuerung RNC A und das erste Operations- und Wartungszentrum OMC-R A bilden eine funktionale Einheit A, die von einem ersten Betreiber A kontrolliert wird. Das Funkkommunikationssystem weist ein weiteres Stammnetzwerk CN B auf, das mit einer zweiten Funknetzsteuerung RNC B kommuniziert. Die zweite Funknetzsteuerung RNC B wird von einem zweiten Operations- und Wartungszentrum OMC-R B gesteuert. Das zweite Stammnetzwerk CN B, die zweite Funknetzsteuerung RNC B und das zweite Operations- und Wartungszentrum OMC-R B bilden eine funktionale Einheit B, die von einem zweiten Betreiber B kontrolliert wird.

In einer Basisstation NB sind der funktionalen Einheit A ein erster Kommunikationsanschluss (Kommunikations-Port) CP A und der funktionalen Einheit B ein zweiter Kommunikationsanschluss (Kommunikations-Port) CP B eingerichtet. Der erste Kommunikationsanschluss CP A ist dabei fest der ersten Funknetzsteuerung RNC A zugeordnet. Der zweite Kommunikationsanschluss CP B ist dabei fest der zweiten Funknetzsteuerung RNC B zugeordnet. Aus Sicht der ersten Funknetzsteuerung RNC A, sowie der zweiten Funknetzsteuerung RNC B ist dadurch eine 1:1-Relation zwischen Funknetzsteuerung RNC A bzw. RNC B und Kommunikationsanschluss CP A bzw. CP B der Basisstation NB gegeben. Die Einrichtung eines Kommunikationsanschlusses für eine funktionale Einheit einer logisch getrennten Basisstation ist durch den Standard mit der Bezeichnung 3GPP TS 25.430 V3.6.0 (UTRAN Iub Interface: General Aspects and Principles (Release 1999)) nicht eingeschränkt. Dadurch ist es möglich, mehrere, eindeutige logische Beziehungen zwischen den funktionalen Einheiten einer Basisstation und verschiedenen Funknetzsteuerungen mit Hilfe von Kommunikationsanschlüssen festzulegen.

Signale zu ersten Kommunikationsverbindungen, die über die erste Funknetzsteuerung RNC A geleitet werden, sowie zweiter Kommunikationsverbindungen, die über die zweite Funknetzsteuerung RNC B geleitet werden, werden in den funktionalen Einheiten der Basisstation NB in einer gemeinsamen Signalverarbeitungseinrichtung und einem gemeinsamen Hochfrequenzteil verarbeitet. Die auf den ersten Kommunikationsverbindungen und die auf den zweiten Kommunikationsverbindungen zu übermittelnden Daten werden jeweils mit dem Standard entnommenen Kennungen versehen, wie zum Beispiel der sogenannten Cell-ID, die ihre Zugehörigkeit zu der ersten Funknetzsteuerung RNC A bzw. der zweiten Funknetzsteuerung RNC B festlegen. Anhand dieser Kennungen ist darüber hinaus eine Zuordnung zu einer ersten Zelle A, die dem ersten Betreiber A zugeordnet ist, und einer zweiten Zelle B, die dem zweiten Betreiber B zugeordnet ist, festgelegt. Signale, die von der Basisstation NB aus der Zelle Z A bzw. Z B empfangen werden, werden anhand der Kennungen dem jeweils zugehörigen Kommunikationsanschluss CP A bzw. CP B zugeleitet und von dort über die jeweils betreffende Iub-Schnittstelle an die Funknetzsteuerung RNC A bzw. RNC B geleitet. Die Unterscheidung der ersten Kommunikationsverbindung und der zweiten Kommunikationsverbindung, die von unterschiedlichen Betreibern A, B vermittelt werden, erfolgt anhand der Kennungen und des Kommunikationsanschlusses CP A bzw. CP B. Die Signalverarbeitung in der Basisstation ist für die Signale beider Kommunikationsverbindungen identisch. Es kann somit die gesamte Signalverarbeitungskapazität der Basisstation ND für die jeweils zu verarbeitenden Signale herangezogen werden.

Um größere Nachrichtenvolumina verarbeiten zu können, ist es vorteilhaft, in der Basisstation mehrere Signalverarbeitungseinrichtungen, die auf mehreren Prozessorkarten untergebracht sind, vorzusehen, die als Pool betrieben werden. Das heisst, die Signale sowohl der ersten Kommunikationsverbindungen, als auch der zweiten Kommunikationsverbindungen haben gleichberechtigt Zugriff zur vorhandenen Prozessorkapazität. Die Unterscheidung erfolgt wie oben erwähnt, anhand der Kennungen über die Kommunikationsanschlüsse CP A, CP B.

Die Basisstation NB wird von einem dritten Operations- und Wartungszentrum OMC-B gesteuert. Die Basisstation NB wird somit nur von einem Betreiber kontrolliert. Da jedoch die logische Steuerung der Signale der ersten Kommunikationsverbindungen von dem Operations- und Wartungszentrum OMC-R A für den Betreiber A und der Signale der zweiten Kommunikationsverbindungen von dem Operations- und Wartungszentrum OMC-R B für den Betreiber B erfolgt, ist eine Einflussnahme des einen Betreibers auf diejenigen logischen Ressourcen, die über die Kommunikationsverbindungen des anderen Betreibers angesteuert und verwaltet werden, ausgeschlossen. Die Ansteuerung und Verwaltung der logischen Ressourcen sind sämtlich im Sinne der Regulierungsbehörde für Telekommunikation und Post als relevant für die funktionale und damit wettbewerbsrechtliche Unabhängigkeit eines Betreibers einzustufen. Der Ausschluß der gegenseitigen Einflußnahme die logischen Ressourcen betreffend erfüllt damit die Vorschriften der Regulierungsbehörde für Telekommunikation und Post.

## Patentansprüche

1. Funkkommunikationssystem
- bei dem eine Basisstation vorgesehen ist, über die erste Kommunikationsverbindungen, für die Signale unter Verwendung einer ersten Trägerfrequenz über eine Luftschnittstelle übertragen werden, und zweite Kommunikationsverbindungen, für die Signale unter Verwendung einer zweiten Trägerfrequenz über die Luftschnittstelle übertragen werden, geleitet werden,
- bei dem eine erste Funknetzsteuerung vorgesehen ist, über die die ersten Kommunikationsverbindungen geleitet werden,
- bei dem eine zweite Funknetzsteuerung vorgesehen ist, über die die zweiten Kommunikationsverbindungen geleitet werden,
- bei dem die Basisstation ein gemeinsames Hochfrequenzteil aufweist, das Signale der ersten Kommunikationsverbindungen und Signale der zweiten Kommunikationsverbindungen verarbeitet.

2. Funkkommunikationssystem nach Anspruch 1,
- bei dem das Hochfrequenzteil einen Sende- und einen Empfangszweig aufweist,
- bei dem der Sendezweig und der Empfangszweig über ein Duplexfilter zur Trennung von Sende- und Empfangsband mit einer Antenne verbunden sind,
- bei dem der Sendezweig einen Leistungsverstärker umfasst,
- bei dem der Empfangszweig einen Vorverstärker umfasst,
- bei dem der Empfangszweig einen Splitter aufweist, der mit dem Ausgang des Vorverstärkers verbunden ist und der zwei breitbandige Ausgänge aufweist, die jeweils das komplette Empfangsband abdecken.

3. Funkkommunikationssytem nach Anspruch 2,
- bei dem das gemeinsame Hochfrequenzteil einen ersten Hochfrequenzzweig und einen zweiten Hochfrequenzzweig umfasst, wobei der erste Hochfrequenzzweig mit einer ersten Antenne und der zweite Hochfrequenzzweig mit einer zweiten Antenne verbunden ist,
- bei dem der erste Hochfrequenzzweig und der zweite Hochfrequenzzweig im Wesentlichen gleich aufgebaut sind und jeweils ein Duplexfilter, einen Sendezweig mit einem Leistungsverstärker und einen Empfangszweig mit einem Vorverstärker und einem Splitter aufweisen,
- bei dem dem Sendezweig des ersten Hochfrequenzzweiges Signale mit der ersten Trägerfrequenz und dem Sendezweig des zweiten Hochfrequenzzweiges Signale mit der zweiten Trägerfrequenz zugeführt werden.

4. Funkkommunikationssystem nach Anspruch 3,
- bei dem der Sendezweig jeweils einen Kombiner aufweist, dem Signale mit der ersten Trägerfrequenz und Signale mit der zweiten Trägerfrequenz zugeführt werden, und dessen Ausgang mit dem Eingang des Leistungsverstärkers verbunden ist.

5. Funkkommunikationssystem nach einem der Ansprüche 1 bis 4,
- bei dem die Basisstation Signale in mehrere Sektoren aussendet bzw. aus mehreren Sektoren empfängt, und bei dem in der Basisstation für jeden Sektor ein gemeinsames Hochfrequenzteil vorgesehen ist.

6. Funkkommunikationssystem nach einem der Ansprüche 1 bis 5,
- bei dem die Basisstation zwei getrennte Signalverarbeitungseinrichtungen aufweist, wobei in einer ersten Signalverarbeitungseinrichtung die Signale mit der ersten Trägerfrequenz und in einer zweiten Signalverarbeitungseinrichtung die Signale mit der zweiten Trägerfrequenz verarbeitet werden.

7. Funkkommunikationssystem nach einem der Ansprüche 1 bis 5,
- bei dem die Basisstation eine Signalverarbeitungseinrichtung aufweist, in der DV-Programme zur Verarbeitung der Signale mit der ersten Trägerfrequenz und der Signale mit der zweiten Trägerfrequenz vorgesehen sind, wobei die DV-Programme zwei logische Signalverarbeitungseinrichtungen emulieren.

8. Funkkommunikationssystem nach einem der Ansprüche 1 bis 5,
- bei dem die Basisstation einen ersten Kommunikationsanschluss und einen zweiten Kommunikationsanschluss aufweist, wobei der erste Kommunikationsanschluss über eine erste Schnittstelle mit der ersten Funknetzsteuerung und der zweite Kommunikationsanschluss über eine zweite Schnittstelle mit der zweiten Funknetzsteuerung verbunden ist,
- bei dem in der Basisstation die ersten Kommunikationsverbindungen über den ersten Kommunikationsanschluss und die zweiten Kommunikationsverbindungen über den zweiten Kommunikationsanschluss geleitet werden.

9. Funkkommunikationssystem nach Anspruch 8,
- bei dem den ersten Kommunikationsverbindungen und den zweiten Kommunikationsverbindungen jeweils eine Kennung zugewiesen wird,
- bei dem die ersten bzw. zweiten Kommunikationsverbindungen anhand der Kennung dem ersten bzw. zweiten Kommunikationsanschluss zugeordnet werden.

10. Funkkommunikationssystem nach Anspruch 8 oder 9,
- bei dem die Basisstation mehrere Signalverarbeitungseinrichtungen aufweist, die als Pool eingesetzt werden, um sowohl Signale von ersten Kommunikationsverbindungen, als auch Signale von zweiten Kommunikationsverbindungen zu verarbeiten.
